(19) Europäisches Patentamt
European Patent Office
Office européen des brevets

(11) EP 3 162 431 A1

(12) **EUROPEAN PATENT APPLICATION**
published in accordance with Art. 153(4) EPC

(43) Date of publication:
**03.05.2017 Bulletin 2017/18**

(21) Application number: **15814557.3**

(22) Date of filing: **30.06.2015**

(51) Int Cl.:
***B01D 71/56*** (2006.01) ***B01D 69/00*** (2006.01)
***B01D 69/10*** (2006.01) ***B01D 69/12*** (2006.01)
***B32B 27/34*** (2006.01) ***C08G 69/32*** (2006.01)
***C08J 5/18*** (2006.01)

(86) International application number:
**PCT/JP2015/068921**

(87) International publication number:
**WO 2016/002821 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 JP 2014133715**

(71) Applicant: **Toray Industries, Inc.**
**Tokyo 103-8666 (JP)**

(72) Inventors:
- **OGAWA Takafumi**
  **Otsu-shi**
  **Shiga 520-8558 (JP)**
- **SHIMURA Harutoki**
  **Otsu-shi**
  **Shiga 520-8558 (JP)**
- **FURUNO Shuji**
  **Otsu-shi**
  **Shiga 520-8558 (JP)**
- **TAKAYA Kiyohiko**
  **Otsu-shi**
  **Shiga 520-8558 (JP)**
- **SASAKI Takao**
  **Otsu-shi**
  **Shiga 520-8558 (JP)**
- **KIMURA Masahiro**
  **Otsu-shi**
  **Shiga 520-8558 (JP)**

(74) Representative: **Hoefer & Partner Patentanwälte mbB**
**Pilgersheimer Straße 20**
**81543 München (DE)**

# (54) COMPOSITE SEMIPERMEABLE MEMBRANE

(57) An object of the present invention is to provide a composite semipermeable membrane which has practical water permeability and removing properties and has a high boron removal ratio even after contact with chlorine. A composite semipermeable membrane of the present invention is a composite semipermeable membrane including a substrate, a porous supporting layer and a separation functional layer, which are superposed in this order, in which the separation functional layer includes a crosslinked fully aromatic polyamide, and the crosslinked fully aromatic polyamide has a molar ratio (amide group content) between a total molar proportion of a polyfunctional amine and a polyfunctional aromatic halide and a molar proportion of an amide group of 0.86-1.20.

EP 3 162 431 A1

## Description

TECHNICAL FIELD

The present invention relates to a composite semipermeable membrane useful for selective separation of a liquid mixture. In particular, the present invention relates to a composite semipermeable membrane which has practical water permeability and high chlorine resistance.

BACKGROUND ART

Membrane separation methods are spreading as methods for removing substances (e.g., salts) dissolved in a solvent (e.g., water) from the solvent. Membrane separation methods are attracting attention as energy-saving and resource-saving methods.

Examples of the membranes for use in the membrane separation methods include microfiltration membranes, ultrafiltration membranes, nanofiltration membranes, and reverse osmosis membranes. These membranes are used for producing potable water, for example, from seawater, brackish water, or water containing a harmful substance, and for producing industrial ultrapure water, wastewater treatment, recovery of valuables, etc. (see, for example, Patent Documents 1 and 2).

Most of the reverse osmosis membranes and nanofiltration membranes that are commercially available at present are composite semipermeable membranes. Many of the composite semipermeable membranes are ones which include a porous supporting layer and an active layer formed by condensation-polymerizing monomers on the porous supporting layer. Among such composite semipermeable membranes, a composite semipermeable membrane having a separation functional layer including a crosslinked polyamide obtained by the polycondensation reaction of a polyfunctional amine with a polyfunctional acid halide is in extensive use as a separation membrane having high permeability and selectively separating properties.

From the standpoint of attaining a cost reduction in various water treatments in water production plants, etc. by improving the operation stability, simplifying the operation, and prolonging the membrane life, those composite semipermeable membranes are required to have durability which enables the composite semipermeable membranes to withstand cleaning with various oxidizing agents, in particular, chlorine. Although some of the known polyamide-based semipermeable membranes described above have some degree of resistance to oxidizing agents, a semipermeable membrane which combines higher resistance to oxidizing agents, water permeability, and removing properties so as to accommodate a wider variety of water quality, is desired.

Known as methods for improving durability concerning chlorine resistance are a method in which monomer ingredients for forming a separation functional layer are improved and a method in which a protective layer is formed on a separation functional layer. Patent Document 3 discloses use of 2,6-diaminotoluene as a polyfunctional amine for forming a separation functional layer. Patent Document 4 discloses use of 4,6-diaminopyridine as a polyfunctional amine for forming a separation functional layer.

BACKGROUND ART DOCUMENT

PATENT DOCUMENT

Patent Document 1: JP-A-55-14706
Patent Document 2: JP-A-5-76740
Patent Document 3: JP-A-7-178327
Patent Document 4: JP-A-7-275673

SUMMARY OF THE INVENTION

PROBLEMS THAT THE INVENTION IS TO SOLVE

The various proposals described above include a membrane having chlorine resistance. However, no membrane which combines water permeability and removing properties has been obtained. Furthermore, there are cases where the conventional composite semipermeable membranes decrease in boron removal ratio when used in such a situation that the raw water has poor quality and cleaning with chlorine is frequently conducted for apparatus maintenance.

An object of the present invention is to provide a composite semipermeable membrane which has practical

water permeability and removing properties and has a high boron removal ratio even after contact with chlorine.

MEANS FOR SOLVING THE PROBLEMS

In order to achieve the above-mentioned object, the present invention has the following configurations (1) to (4).

(1) A composite semipermeable membrane including a substrate, a porous supporting layer and a separation functional layer, which are superposed in this order,
in which the separation functional layer includes a crosslinked fully aromatic polyamide, and
the crosslinked fully aromatic polyamide has a molar ratio (amide group content) between a total molar proportion of a polyfunctional amine and a polyfunctional aromatic halide and a molar proportion of an amide group of 0.86-1.20, the molar ratio (amide group content) being represented by the following expression:

Amide group content = (molar proportion of amide group)/[(molar proportion of polyfunctional amine)+(molar proportion of polyfunctional aromatic acid halide)].

(2) The composite semipermeable membrane according to (1), in which the separation functional layer has a pleated structure constituted of a thin membrane, and the thin membrane has a thickness of 10-24 nm.
(3) The composite semipermeable membrane according to (1) or (2), in which the separation functional layer has a weight per unit area of the composite semipermeable membrane of 80-120 mg/m$^2$.
(4) The composite semipermeable membrane according to any one of (1) to (3), in which the separation functional layer is formed by the following steps (a) to (c):

(a) a step of bringing an aqueous solution containing a polyfunctional aromatic amine into contact with a surface of the porous supporting layer;
(b) a step of bringing an organic-solvent solution containing a polyfunctional aromatic acid halide into contact with the porous supporting layer with which the aqueous solution containing the polyfunctional aromatic amine has been brought into contact; and
(c) a step of heating the porous supporting layer with which the organic-solvent solution containing the polyfunctional aromatic halide has been brought into contact, and
in which the heating in the step (c) is performed at a temperature of 50-180°C, and a residual ratio of the organic solvent after the heating is regulated to 30-85%, thereby obtaining the separation functional layer.

ADVANTAGE OF THE INVENTION

According to the present invention, it is possible to provide a composite semipermeable membrane which has practical water permeability and high chlorine resistance.

BRIEF DESCRIPTION OF THE DRAWINGS

[Fig. 1] Fig. 1 is a cross-sectional view which illustrates a pleated structure of a separation functional layer.
[Fig. 2] Fig. 2 is a cross-sectional view of the thin membrane which constitutes the separation functional layer.

MODE FOR CARRYING OUT THE INVENTION

1. Composite Semipermeable Membrane

The composite separation membrane of the present invention is a composite semipermeable membrane including a substrate, a porous supporting layer and a separation functional layer, which are superposed in this order. The porous supporting layer is formed on the substrate, and the separation functional layer is formed on the porous supporting layer.
The separation functional layer includes a crosslinked fully aromatic polyamide. This crosslinked fully aromatic

polyamide in the separation functional layer has a molar ratio (amide group content) between a total molar proportion of a polyfunctional amine and a polyfunctional aromatic halide and a molar proportion of an amide group of 0.86-1.20, the molar ratio (amide group content) being represented by the following expression.

$$\text{Amide group content} = (\text{molar proportion of amide group})/[(\text{molar proportion of polyfunctional amine})+(\text{molar proportion of polyfunctional aromatic acid halide})]$$

In the present invention, it is preferable that the separation functional layer has a pleated structure constituted of a thin membrane and that this thin membrane has a thickness of 10-24 nm. It is more preferable that the separation functional layer has a weight per unit area of 80-120 mg/m$^2$.

(1-1) Substrate

Examples of the substrate include polyester-based polymers, polyamide-based polymers, polyolefin-based polymers, and mixtures or copolymers thereof. Especially preferred of these is fabric of a polyester-based polymer which is highly stable mechanically and thermally. With respect to the form of fabric, use can be advantageously made of long-fiber nonwoven fabric, short-fiber nonwoven fabric, or woven or knit fabric. The term "long-fiber nonwoven fabric" means nonwoven fabric having an average fiber length of 300 mm or longer and an average fiber diameter of 3-30 μm.

It is preferable that the substrate has an air permeability of 0.5-5.0 cc/cm$^2$/sec. In cases when the air permeability of the substrate is within that range, a polymer solution for forming the porous supporting layer is impregnated into the substrate and, hence, adhesion to the substrate improves and the physical stability of the porous supporting layer can be heightened.

The thickness of the substrate is preferably in the range of 10-200 μm, more preferably in the range of 30-120 μm.

In this description, thickness is expressed in terms of average value unless otherwise indicated. The term "average value" herein means arithmetic average value. Specifically, the thickness of the substrate and that of the porous supporting layer are each determined through an examination of a cross-section thereof by calculating an average value of the thicknesses of 20 points measured at intervals of 20 μm along a direction (plane direction of the membrane) perpendicular to the thickness direction.

(1-2) Porous Supporting Layer

The porous supporting layer in the present invention has substantially no separating performance concerning separation of ions and the like, and serves to impart strength to the separation functional layer, which substantially has separating performance. The porous supporting layer is not particularly limited in size and distribution of pores. However, preferred is a porous supporting layer which, for example, has even and fine pores or has fine pores that gradually increase in size from the surface thereof on the side where the separation functional layer is to be formed to the surface thereof on the other side and in which the size of the fine pores as measured on the surface on the side where the separation functional layer is to be formed is 0.1-100 nm. However, there are no particular limitations on the materials to be used and the shapes thereof

Usable as materials for the porous supporting layer are, for example, homopolymers or copolymers such as polysulfones, polyethersulfones, polyamides, polyesters, cellulosic polymers, vinyl polymers, poly(phenylene sulfide), poly(phenylene sulfide sulfone)s, poly(phenylene sulfone), and poly(phenylene oxide). These polymers can be used alone or as a blend thereof. Usable as the cellulosic polymers are cellulose acetate, cellulose nitrate, and the like. Usable as the vinyl polymers are polyethylene, polypropylene, poly(vinyl chloride), polyacrylonitrile, and the like. Preferred of these are homopolymers or copolymers such as polysulfones, polyamides, polyesters, cellulose acetate, cellulose nitrate, poly(vinyl chloride), polyacrylonitrile, poly(phenylene sulfide), and poly(phenylene sulfide sulfone)s. More preferred examples include cellulose acetate, polysulfones, poly(phenylene sulfide sulfone)s, and poly(phenylene sulfone). Of these materials, polysulfones can be generally used since this material is highly stable chemically, mechanically, and thermally and is easy to mold.

Specifically, a polysulfone made up of repeating units represented by the following chemical formula is preferred because use of this polysulfone renders pore-diameter control of the porous supporting layer easy and this layer has high dimensional stability. In the chemical formula, n is a positive integer.

[Chem. 1]

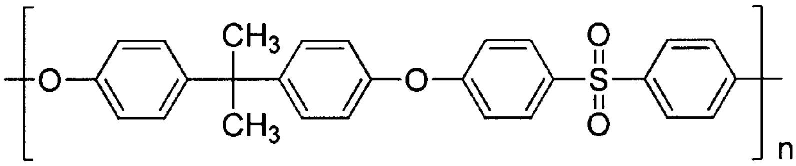

The polysulfone, when examined by gel permeation chromatography (GPC) using N-methylpyrrolidone as a solvent and using polystyrene as a reference, has a weight-average molecular weight (Mw) of preferably 10,000-200,000, more preferably 15,000-100,000. In cases when the Mw thereof is 10,000 or higher, the polysulfone as a porous supporting layer can have preferred mechanical strength and heat resistance. Meanwhile, in cases when the Mw thereof is 200,000 or less, the solution has a viscosity within an appropriate range and satisfactory formability is rendered possible.

For example, an N,N-dimethylformamide (hereinafter referred to as DMF) solution of the polysulfone is cast in a certain thickness on densely woven polyester fabric or nonwoven fabric, and the solution cast is coagulated by a wet process in water. Thus, a porous supporting layer can be obtained in which most of the surface has fine pores with a diameter of several tens of nanometers or less.

The thicknesses of the substrate and porous supporting layer affect the strength of the composite semipermeable membrane and the packing density in an element fabricated using the composite semipermeable membrane. From the standpoint of obtaining sufficient mechanical strength and sufficient packing density, the total thickness of the substrate and the porous supporting layer is preferably 30-300 μm, more preferably 100-220 μm. It is preferable that the thickness of the porous supporting layer is 20-100 μm.

(1-3) Separation Functional Layer

In the present invention, the separation functional layer includes a crosslinked fully aromatic polyamide. It is especially preferable that the separation functional layer should include a crosslinked fully aromatic polyamide as a main component. The term "main component" means a component which accounts for at least 50% by weight of the components of the separation functional layer. In cases when the separation functional layer includes a crosslinked fully aromatic polyamide in an amount of 50% by weight or more, high removal performance can be exhibited. It is preferable that the separation functional layer is constituted substantially of a crosslinked fully aromatic polyamide only. Namely, it is preferable that at least 90% by weight of the separation functional layer is accounted for by a crosslinked fully aromatic polyamide.

The crosslinked fully aromatic polyamide can be formed by interfacial polycondensation of one or more polyfunctional aromatic amines with one or more polyfunctional aromatic acid halides. It is preferable that at least one of the polyfunctional aromatic amines and the polyfunctional aromatic acid halides includes a compound having a functionality of 3 or higher.

The thickness of the separation functional layer is usually in the range of 0.01-1 μm, preferably in the range of 0.1-0.5 μm, from the standpoint of obtaining sufficient separation performance and water permeation rate. The thickness of the separation functional layer is measured with a transmission electron microscope.

The separation functional layer in the present invention is hereinafter sometimes referred to as "polyamide separation functional layer".

The term "polyfunctional aromatic amine" means an aromatic amine that has, in the molecule thereof, two or more amino groups which each are a primary amino group or a secondary amino group and in which at least one is a primary amino group. Examples of the polyfunctional aromatic amine include polyfunctional aromatic amines in each of which two amino groups have been bonded to the aromatic ring in the ortho, meta, or para positions, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine and polyfunctional aromatic amines such as 1,3,5-triaminobenzene, 1,2,4-triaminobenzene, 3,5-diaminobenzoic acid, 3-aminobenzylamine, and 4-aminobenzylamine. In particular, m-phenylenediamine, p-phenylenediamine, and 1,3,5-triaminobenzene are suitable for use when the selectively separating properties, permeability, and heat resistance of the membrane are taken into account. Of these, more preferred is to use m-phenylenediamine (hereinafter referred to also as m-PDA) from the standpoints of availability and handleability. Those polyfunctional aromatic amines may be used alone or in combination of two or more thereof.

The term "polyfunctional aromatic acid halide" means an aromatic acid halide which has at least two halogenocarbonyl groups in the molecule thereof. Examples of trifunctional acid halides include trimesoyl chloride, and examples of bifunctional acid halides include biphenyldicarbonyl dichloride, azobenzenedicarbonyl dichloride, terephthaloyl chloride, isophthaloyl chloride, and naphthalenedicarbonyl chloride. When the reactivity with the polyfunctional aromatic amines is taken into account, it is preferable that the polyfunctional aromatic acid halide is polyfunctional aromatic acid

chlorides. When the selectively separating properties and heat resistance of the membrane are taken into account, it is preferable that the polyfunctional aromatic acid halide is polyfunctional aromatic acid chlorides which each have two to four chlorocarbonyl groups in the molecule thereof. It is more preferred to use trimesoyl chloride among these from the standpoints of availability and handleability. Those polyfunctional aromatic acid halides may be used alone or in combination of two or more thereof.

Present in the polyamide separation functional layer are amide groups derived from the polymerization of the polyfunctional aromatic amine(s) with the polyfunctional aromatic acid halide(s) and amino and carboxyl groups derived from unreacted functional groups. The present inventors diligently made investigations and, as a result, have found that a polyamide separation functional layer has high chlorine resistance in cases when the molar ratio (amide group content) between the total molar proportion of a polyfunctional amine and a polyfunctional aromatic halide and the molar proportion of an amide group is 0.86 or higher, the molar ratio (amide group content) being represented by the following expression. The present inventors have further found that the polyamide separation functional layer has high water permeability in cases when the amide group content is 1.20 or less. The amide group content is preferably 0.88-1.20.

Amide group content = (molar proportion of amide group)/[(molar proportion of polyfunctional amine)+(molar proportion of polyfunctional aromatic acid halide)]

The molar proportion of an amide group, molar proportion of a polyfunctional amine, and proportion of a polyfunctional aromatic acid halide can be determined by examining the separation functional layer by $^{13}C$ solid NMR spectroscopy. Specifically, the substrate is removed from a 5-$m^2$ portion of the composite semipermeable membrane to obtain the polyamide separation functional layer and the porous supporting layer, and the porous supporting layer is thereafter dissolved away to obtain the polyamide separation functional layer. The polyamide separation functional layer obtained is examined by DD/MAS-$^{13}C$ solid NMR spectroscopy. The proportions can be calculated from comparisons between the integrals of peaks attributable to carbon atoms of the functional groups or of peaks attributable to carbon atoms to which the functional groups have been bonded.

It is presumed that when the crosslinked fully aromatic polyamide comes into contact with chlorine, chlorination of aromatic rings and decomposition of amide groups occur. It is known that as a result of the chlorination and decomposition, the polyamide separation functional layer decreases in membrane performance, in particular, boron removal ratio. In cases when the amide group content is 0.86 or higher, a boron removal ratio which can withstand such practical use can be maintained.

The present inventors have furthermore found that the higher the amide group content, the more the water permeability decreases. This is presumed to be because the higher the amide group content, the denser the structure of the polymer formed. So long as the amide group content is 1.20 or less, the polyamide separation functional layer can have practical water permeability.

In the present invention, it is preferable that the separation functional layer 1 formed on the porous supporting layer 2 and made of a crosslinked fully aromatic polyamide has a pleated structure as shown in Fig. 1. The pleated structure is a structure which includes protrusions 12 and recesses 13 and is constituted of a thin membrane 11 made of the polyamide.

It is thought that in cases when the thin membrane has a large thickness, the change in membrane performance which occurs upon contact with chlorine can be retarded. However, the thickness of the thin membrane affects the water permeability as well, and the water permeability decreases as the thickness of the thin membrane increases. A separation functional layer constituted of a thin membrane having a thickness of 10-24 nm is preferred because this separation functional layer can combine high chlorine resistance and water permeability. The thickness of the thin membrane is more preferably 15-24 nm.

The thickness of the thin membrane 11 can be measured with a transmission electron microscope. First, a sample of the separation membrane is embedded in a water-soluble polymer in order to produce an ultrathin section for a transmission electron microscope (TEM). The water-soluble polymer may be any water-soluble polymer capable of maintaining the shape of the sample, and PVA or the like can, for example, be used. Next, the separation membrane is dyed with $OsO_4$ in order to facilitate a cross-section examination, and this separation membrane is cut with an ultramicrotome to produce an ultrathin section. A cross-section of the ultrathin section obtained is photographed using a TEM. A magnification for the examination can be suitably determined in accordance with the thickness of the separation functional layer.

The cross-section photograph obtained can be analyzed with an image analysis software. First, five of the protrusions in the pleats are selected on the cross-section photograph. With respect to each of the protrusions, the

thickness T of the thin membrane 11 is measured at each of ten points within the range from the upper portion (top) to 90% of the height, as shown in Figs. 1 and 2. An arithmetic average value of the thus-obtained 50 values is determined.

Meanwhile, in cases when the amount of the crosslinked fully aromatic polyamide constituting the separation functional layer is large, the change in membrane performance which occurs upon contact with chlorine can be retarded. However, the amount of the crosslinked fully aromatic polyamide slightly affects the water permeability as well, and there is a tendency that the larger the amount thereof, the lower the water permeability. Specifically, so long as the weight of the separation functional layer per unit area is 80-120 $mg/m^2$, high chlorine resistance and water permeability can be both attained. That range is hence preferred. The weight of the separation functional layer per unit area is more preferably 90-120 $mg/m^2$.

The amount of the crosslinked fully aromatic polyamide which constitutes the separation functional layer can be determined by peeling the substrate from the composite semipermeable membrane, dissolving away the porous supporting layer, and regarding the amount of the resultant residue as the amount of the crosslinked fully aromatic polyamide. A size of 5 $m^2$ suffices for the composite semipermeable membrane to be used.

Although amide groups derived from the polymerization of one or more polyfunctional aromatic amines with one or more polyfunctional aromatic acid halides and amino and carboxyl groups derived from unreacted functional groups are present in the polyamide separation functional layer as described above, there also are other functional groups which were possessed by the polyfunctional aromatic amine(s) or polyfunctional aromatic acid halide(s). Furthermore, it is possible to introduce new functional groups by a chemical treatment. By performing a chemical treatment, functional groups can be introduced into the polyamide separation functional layer and the performance of the composite semipermeable membrane can be improved. Examples of new functional groups include alkyl groups, alkenyl groups, alkynyl groups, halogen radicals, hydroxyl group, ether group, thioether group, ester groups, aldehyde group, nitro group, nitroso group, nitrile group, and azo group. For example, chlorine radicals can be introduced by a treatment with an aqueous sodium hypochlorite solution. Halogen radicals can be introduced also by the Sandmeyer reaction via diazonium salt formation. Furthermore, azo groups can be introduced by an azo coupling reaction via diazonium salt formation.

## 2. Process for Producing the Composite Semipermeable Membrane

Next, a process for producing the composite semipermeable membrane is explained. The composite semipermeable membrane includes a step in which a porous supporting layer is formed on at least one surface of a substrate and a step in which a separation functional layer is formed on the porous supporting layer.

### (2-1) Formation of Porous Supporting Layer

As the porous supporting layer, an appropriate membrane can be selected from among various commercial membranes such as "Millipore Filter VSWP" (trade name), manufactured by Millipore Corp.

It is also possible to produce a porous supporting layer by applying a solution of any of the above-mentioned materials for the porous supporting layer to a substrate and coagulating the applied solution with a coagulation bath. Furthermore, methods known as methods for forming a porous supporting layer are suitable for use.

### (2-2) Process for Producing the Separation Functional Layer

Next, steps for forming the separation functional layer which constitutes the composite semipermeable membrane are explained. The steps for forming the separation functional layer include the following steps (a) to (c):

(a) a step of bringing an aqueous solution containing a polyfunctional aromatic amine into contact with a surface of the porous supporting layer;
(b) a step of bringing an organic-solvent solution containing a polyfunctional aromatic acid halide into contact with the porous supporting layer with which the aqueous solution containing the polyfunctional aromatic amine has been brought into contact; and
(c) a step of heating the porous supporting layer with which the organic-solvent solution containing the polyfunctional aromatic halide has been brought into contact.

In step (a), the concentration of the polyfunctional aromatic amine in the aqueous polyfunctional-aromatic-amine solution is preferably in the range of 0.1-20% by weight, more preferably in the range of 0.5-15% by weight. In cases when the concentration of the polyfunctional aromatic amine is within this range, sufficient solute-removing performance and water permeability can be obtained. The aqueous polyfunctional-aromatic-amine solution may contain a surfactant, organic solvent, alkaline compound, antioxidant, and the like so long as these ingredients do not inhibit the reaction between the polyfunctional aromatic amine and the polyfunctional aromatic acid halide. Surfactants have the

effects of improving the wettability of the surface of the supporting layer and reducing interfacial tension between the aqueous polyfunctional-aromatic-amine solution and nonpolar solvents. There are cases where organic solvents act as a catalyst in interfacial polycondensation reactions, and there are cases where addition of an organic solvent enables the interfacial polycondensation reaction to be efficiently carried out.

It is preferable that the aqueous polyfunctional-aromatic-amine solution is continuously brought into even contact with a surface of the porous supporting layer. Specific examples of methods therefor include: a method in which the aqueous polyfunctional-aromatic-amine solution is applied by coating to the porous supporting layer; and a method in which the porous supporting layer is immersed in the aqueous polyfunctional-aromatic-amine solution. The period during which the porous supporting layer is in contact with the aqueous polyfunctional-amine solution is preferably 1 second to 10 minutes, more preferably 10 seconds to 3 minutes.

After the aqueous polyfunctional-amine solution is brought into contact with the porous supporting layer, the excess solution is sufficiently removed so that no droplets remain on the membrane. By sufficiently removing the excess solution, any portions where droplets remain can be prevented from becoming membrane defects in the resulting porous supporting layer, thereby reducing the removal performance. As a method for removing the excess solution, use can be made, for example, of a method in which the supporting layer which has been contacted with the aqueous polyfunctional-amine solution is held vertically to make the excess aqueous solution to flow down naturally and a method in which streams of a gas, e.g., nitrogen, are blown against the supporting membrane from air nozzles to forcedly remove the excess solution, as described in JP-A-2-78428. After the removal of the excess solution, the membrane surface may be dried to remove some of the water contained in the aqueous solution.

In step (b), the concentration of the polyfunctional acid halide in the organic-solvent solution is preferably in the range of 0.01-10% by weight, more preferably in the range of 0.02-2.0% by weight. This is because a sufficient reaction rate can be obtained by regulating the concentration thereof to 0.01% by weight or higher and the occurrence of side reactions can be inhibited by regulating the concentration thereof to 10% by weight or less. Furthermore, incorporation of an acylation catalyst such as DMF into this organic-solvent solution is more preferred because the interfacial polycondensation is accelerated thereby.

It is desirable that the organic solvent is one which is water-immiscible and does not damage the supporting layer and in which the polyfunctional acid halide dissolves. The organic solvent may be any such organic solvent which is inert to the polyfunctional amine compound and the polyfunctional acid halide. Preferred examples thereof include hydrocarbon compounds such as n-hexane, n-octane, n-decane, and isooctane. Meanwhile, the organic solvent preferably is one which has a boiling point or initial boiling point of 90°C or higher, since the residual ratio of this organic solvent is easy to control.

As a method for bringing the organic-solvent solution of the polyfunctional aromatic acid halide into contact with the porous supporting layer which has been contacted with the aqueous solution of the polyfunctional aromatic amine compound, use can be made of the same method as that for coating the porous supporting layer with the aqueous solution of the polyfunctional aromatic amine.

In step (c), the porous supporting layer with which the organic-solvent solution of a polyfunctional aromatic acid halide has been contacted is heated. The temperature at which the porous supporting layer is heat-treated may be 50-180°C, preferably 60-160°C. Furthermore, the residual ratio of the organic solvent remaining on the porous supporting layer after the heat treatment must be 30-85% of the amount of the organic solvent before the heat treatment, and is preferably 50-80% thereof The residual ratio of the organic solvent herein is a value determined using the following expression from the weights, as measured before and after the heating, of a 100-$cm^2$ portion of the porous supporting layer which has been contacted with the organic solvent in step (b).

$$\text{Residual ratio of organic solvent (\%)} = [(\text{weight of the membrane after heating in oven})/(\text{weight of the membrane before heating in oven})] \times 100$$

As a method for controlling the residual ratio of the organic solvent, use can be made of a method in which the residual ratio thereof is regulated by regulating the oven temperature, wind velocity on the membrane surface, or heating period. In cases when the heat treatment temperature is 50°C or higher and the residual ratio of the organic solvent is 85% or less, thermal acceleration of the interfacial polymerization reaction and acceleration of the interfacial polymerization reaction due to the concentration of the polyfunctional aromatic acid halide which occurs during the interfacial polymerization produce a synergistic effect, resulting in an amide group content of 0.86 or higher, a weight of the separation functional layer per unit area of 80 mg/$m^2$, and a thin-membrane thickness of 10 nm or larger. Meanwhile, in cases when the residual ratio of the organic solvent is 30% or more, the mobility of oligomer molecules yielded by the interfacial polymerization can be ensured and the rate of the interfacial polymerization reaction is inhibited from decreasing, thereby attaining an amide group content of 0.86 or higher.

3. Utilization of the Composite Semipermeable Membrane

The composite semipermeable membrane of the present invention is suitable for use as a spiral type composite semipermeable membrane element produced by winding the composite semipermeable membrane around a cylindrical collecting pipe having a large number of perforations, together with a feed-water channel member such as a plastic net and a permeate channel member such as tricot and optionally with a film for enhancing pressure resistance. Furthermore, such elements can be connected serially or in parallel and housed in a pressure vessel, thereby configuring a composite semipermeable membrane module.

Moreover, the composite semipermeable membrane or the element or module thereof can be combined with a pump for supplying feed water thereto, a device for pretreating the feed water, etc., thereby configuring a fluid separator. By using this separator, feed water can be separated into a permeate such as potable water and a concentrate which has not passed through the membrane. Thus, water suited for a purpose can be obtained.

Examples of the feed water to be treated with the composite semipermeable membrane according to the present invention include liquid mixtures having a TDS (total dissolved solids) of 500 mg/L to 100 g/L, such as seawater, brackish water, and wastewater. In general, TDS means the total content of dissolved solids, and is expressed in terms of "weight/volume" or "weight ratio". According to a definition, the content can be calculated from the weight of a residue obtained by evaporating, at a temperature of 39.5-40.5°C, a solution filtered through a 0.45-μm filter. However, a simpler method is to convert from practical salinity (S).

Higher operation pressures for the fluid separator are effective in improving the solute rejection. However, in view of the resultant increase in the amount of energy necessary for the operation and in view of the durability of the composite semipermeable membrane, the operation pressure at the time when water to be treated is passed through the composite semipermeable membrane is preferably 0.5-10 MPa. With respect to the temperature of the feed water, the solute rejection decreases as the temperature thereof rises. However, as the temperature thereof declines, the membrane permeation flux decreases. Consequently, the temperature thereof is preferably 5-45°C. Meanwhile, too high pH values of the feed water result in a possibility that, in the case of feed water having a high solute concentration, such as seawater, scale of magnesium or the like might occur. There also is a possibility that the membrane might deteriorate due to the high-pH operation. Consequently, it is preferable that the separator is operated in a neutral range.

EXAMPLES

The present invention will be explained below in more detail by reference to Examples, but the present invention should not be construed as being limited by the following Examples.

The amide group content, thickness of the thin membrane, and residual ratio of the organic solvent in each of the Comparative Examples and Examples were determined in the following manners.

(Weight of Functional Layer per Unit Area, and Amide Group Content)

The substrate was physically peeled from a 5-$m^2$ portion of a composite semipermeable membrane to recover the porous supporting layer and the separation functional layer. The porous supporting layer and separation functional layer recovered were cleaned with 95°C hot water for 2 hours. These layers were allowed to stand still at 25°C for 24 hours and dried thereby. Thereafter, the dried layers were introduced little by little into a beaker containing dichloromethane, and the contents were stirred to dissolve the polymer constituting the porous supporting layer. The insoluble in the beaker was recovered with a filter paper. This insoluble was introduced into a beaker containing dichloromethane, the contents were stirred, and the insoluble in the beaker was recovered again. This operation was repeated until the dissolution of any component of the polymer constituting the porous supporting layer in the dichloromethane solution came not to be detected. The separation functional layer recovered was dried in a vacuum dryer to remove the residual dichloromethane.

The separation functional layer obtained was weighed to determine the weight of the separation functional layer per unit area.

Furthermore, the separation functional layer obtained was freeze-pulverized to obtain a powdery sample. This sample was put into a sample tube for solid NMR spectroscopy, and the sample tube was closed. The sample was subjected to $^{13}C$ solid NMR spectroscopy by the CP/MAS method and DD/MAS method. For the $^{13}C$ solid NMR spectroscopy, use can be made, for example, of CMX-300, manufactured by Chemagnetics Inc. Examples of the measuring conditions are shown below.

Reference: polydimethylsiloxane (internal reference: 1.56 ppm)
Sample rotation speed: 10.5 kHz
Pulse repetition time: 100 s

The spectrum obtained was subjected to peak separation to obtain peaks assigned to carbon atoms to which the functional groups had respectively been bonded, and the proportions of functional groups were determined from the areas of the peaks obtained. Using the values thus determined, the amide group content was calculated in accordance with the following expression.

$$\text{Amide group content} = (\text{molar proportion of amide group})/[(\text{molar proportion of polyfunctional amine})+(\text{molar proportion of polyfunctional aromatic acid halide})]$$

(Thickness of Thin Membrane)

A composite semipermeable membrane is embedded in PVA and dyed with $OsO_4$, and the dyed membrane is cut with an ultramicrotome to produce an ultrathin section. A cross-section of the ultrathin section obtained is photographed using a TEM. The cross-section photograph taken with the TEM is analyzed with image analysis software Image Pro in the following manner. Five pleats are selected and, with respect to each pleat, the thickness of the thin membrane is measured at each of ten points within the range from the upper portion to 90% of the height of the pleat (protrusion height). An arithmetic average value of the 50 values is determined.

(Residual Ratio of Organic Solvent)

The residual ratio of organic solvent was calculated from the ratio between membrane weights measured before and after heating in an oven.

$$\text{Residual ratio of organic solvent (\%)} = [(\text{weight of the membrane after heating in oven})/(\text{weight of the membrane before heating in oven})]\times 100$$

Various properties of each composite semipermeable membrane were determined by feeding seawater regulated so as to have a temperature of 25°C and a pH of 6.5 (TDS concentration, 3.5%; boron concentration, about 5 ppm) to the composite semipermeable membrane at an operation pressure of 5.5 MPa to conduct a membrane filtration treatment for 24 hours and examining the permeate obtained thereafter and the feed water for quality.

(Solute Removal Ratio (TDS removal ratio))

$$\text{TDS removal ratio (\%)} = 100\times\{1-(\text{TDS concentration in permeate})/(\text{TDS concentration in feed water})\}$$

(Membrane Permeation Flux)

The rate of permeation of feed water (seawater) through the membrane was expressed in terms of water permeation rate ($m^3$) per membrane area of $m^2$ per day and this rate was taken as the membrane permeation flux ($m^3/m^2$/day).

(Boron Removal Ratio)

The feed water and the permeate were analyzed for boron concentration with an ICP emission spectrometer (P-4010, manufactured by Hitachi Ltd.), and the boron removal ratio was determined using the following equation.

$$\text{Boron removal ratio (\%)} = 100\times\{1\text{-(boron concentrate in permeate)/(boron concentration in feed water)}\}$$

(Chlorine Resistance)

In a 25°C atmosphere, the composite semipermeable membrane is immersed for 20 hours in 100 ppm aqueous sodium hypochlorite solution having a pH adjusted to 6.5. Thereafter, this composite semipermeable membrane was immersed in 1,000 ppm aqueous sodium hydrogen sulfite solution for 10 minutes, subsequently sufficiently rinsed with water, and then evaluated for boron removal ratio, thereby determining the chlorine resistance.

(Production of Porous Supporting Layer)

A 16.0% by weight DMF solution of a polysulfone (PSf) was cast in a thickness of 200 μm on nonwoven polyester fabric (air permeability, 2.0 cc/$cm^2$/sec) under the conditions of 25°C, and this nonwoven fabric was immediately immersed in pure water and allowed to stand for 5 minutes, thereby producing a porous supporting layer.

(Comparative Example 1)

In accordance with the method described in International Publication WO 2011/105278, the porous supporting layer obtained by the operation described above was immersed in a 3% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, a 25°C decane solution containing 0.165% by weight trimesoyl chloride (TMC) was applied to a surface of the membrane so that the surface was completely wetted. This membrane was allowed to stand still for 10 seconds and then to stand still in a 25°C oven for 120 seconds, thereby obtaining a composite semipermeable membrane. The residual ratio of the organic solvent was 99%, and the composite semipermeable membrane obtained had an amide group content of 0.81, a weight of the separation functional layer per unit area of 86 mg/$m^2$, and a thickness of the thin membrane of 14 nm. The composite semipermeable membrane obtained had a performance of 1.0 $m^3$/$m^2$/day and had a boron removal ratio of 67% after the chlorine resistance evaluation.

(Comparative Example 2)

The porous supporting layer obtained by the operation described above was immersed in a 3% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, a 45°C decane solution containing 0.165% by weight trimesoyl chloride (TMC) was applied to a surface of the membrane so that the surface was completely wetted. This membrane was allowed to stand still for 10 seconds and then heated in a 120°C oven for 15 seconds, thereby obtaining a composite semipermeable membrane. The residual ratio of the organic solvent was 95%, and the composite semipermeable membrane obtained had an amide group content of 0.85, a weight of the separation functional layer per unit area of 91 mg/$m^2$, and a thickness of the thin membrane of 15 nm. The composite semipermeable membrane obtained had a performance of 0.5 $m^3$/$m^2$/day and had a boron removal ratio of 71% after the chlorine resistance evaluation.

(Example 1)

The porous supporting layer obtained by the operation described above was immersed in a 3% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, a 45°C Isopar M (manufactured by Exxon Mobil Corp.) solution containing 0.165% by weight trimesoyl chloride (TMC) was applied to a surface of the membrane so that the surface was completely wetted. This membrane was then heated in a 120°C oven so as to result in a residual ratio of the organic solvent of 80%, thereby obtaining a composite semipermeable membrane. The amide group content of the composite semipermeable membrane obtained, the weight of the separation functional layer per unit area, and the thickness of the thin membrane were the values shown in Table 1. The performance and chlorine resistance evaluation of the composite semipermeable membrane obtained were the values shown in Table 1.

(Examples 2 to 6 and Comparative Examples 3 and 4)

Composite semipermeable membranes were produced in the same manner as in Example 1, except that the organic solvent for dissolving TMC therein, oven temperature, heating period, and residual ratio of the organic solvent were changed as shown in Table 2. The amide group content of each of the composite semipermeable membranes obtained, the weight of the separation functional layer per unit area, and the thickness of the thin membrane were the values shown in Table 1. The performance and chlorine resistance of each composite semipermeable membrane obtained were the values shown in Table 1.

(Comparative Examples 5 to 10)

Composite semipermeable membranes were produced in the same manner as in Comparative Example 1, except that the organic solvent for dissolving TMC therein, oven temperature, heating period, and residual ratio of the organic solvent were changed as shown in Table 2. The amide group content of each of the composite semipermeable membranes obtained, the weight of the separation functional layer per unit area, and the thickness of the thin membrane were the values shown in Table 1. The performance and chlorine resistance of each composite semipermeable membrane obtained were the values shown in Table 1.

(Example 7)

The porous supporting layer obtained by the operation described above was immersed in a 2.5% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, a 55°C IP Solvent 2028 (manufactured by Idemitsu Co., Ltd.) solution containing 0.165% by weight trimesoyl chloride (TMC) was applied to a surface of the membrane so that the surface was completely wetted. This membrane was then heated in a 140°C oven so as to result in a residual ratio of the organic solvent of 70%, thereby obtaining a composite semipermeable membrane. The amide group content of the composite semipermeable membrane obtained, the weight of the separation functional layer per unit area, and the thickness of the thin membrane were the values shown in Table 1. The performance and chlorine resistance evaluation of the composite semipermeable membrane obtained were the values shown in Table 1.

(Example 8)

The porous supporting layer obtained by the operation described above was immersed in a 2.5% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, a 70°C IP Solvent 2028 (manufactured by Idemitsu Co., Ltd.) solution containing 0.165% by weight trimesoyl chloride (TMC) was applied to a surface of the membrane so that the surface was completely wetted. This membrane was then heated in a 140°C oven so as to result in a residual ratio of the organic solvent of 62%, thereby obtaining a composite semipermeable membrane. The amide group content of the composite semipermeable membrane obtained, the weight of the separation functional layer per unit area, and the thickness of the thin membrane were the values shown in Table 1. The performance and chlorine resistance evaluation of the composite semipermeable membrane obtained were the values shown in Table 1.

(Example 9)

The porous supporting layer obtained by the operation described above was immersed in a 2.5% by weight aqueous solution of m-phenylenediamine (m-PDA) for 2 minutes and then slowly pulled up vertically, and nitrogen was blown thereagainst from an air nozzle to remove the excess aqueous solution from the surfaces of the supporting layer. Thereafter, an 85°C Isopar M (manufactured by Exxon Mobil Corp.) solution containing 0.165% by weight trimesoyl chloride (TMC) was applied to a surface of the membrane so that the surface was completely wetted. This membrane was then heated in a 150°C oven so as to result in a residual ratio of the organic solvent of 52%, thereby obtaining a composite semipermeable membrane. The amide group content of the composite semipermeable membrane obtained, the weight of the separation functional layer per unit area, and the thickness of the thin membrane were the values shown in Table 1. The performance and chlorine resistance evaluation of the composite semipermeable membrane obtained were the values shown in Table 1.

Table 1

| | Amide group content | Weight of separation functional layer per unit area ($mg/m^2$) | Thickness of thin membrane (nm) | Before contact with chlorine | | After contact with chlorine |
|---|---|---|---|---|---|---|
| | | | | Membrane permeation flux ($m^3/m^2/day$) | Boron removal ratio (%) | Boron removal ratio (%) |
| Example 1 | 0.88 | 94 | 17 | 0.9 | 91 | 76 |
| Example 2 | 0.91 | 96 | 19 | 0.8 | 92 | 78 |
| Example 3 | 0.92 | 95 | 18 | 0.8 | 92 | 78 |
| Example 4 | 0.93 | 98 | 19 | 0.7 | 93 | 79 |
| Example 5 | 0.88 | 94 | 16 | 0.8 | 92 | 75 |
| Example 6 | 0.90 | 93 | 15 | 0.9 | 91 | 73 |
| Example 7 | 0.98 | 101 | 19 | 0.7 | 94 | 81 |
| Example 8 | 1.11 | 120 | 21 | 0.6 | 95 | 81 |
| Example 9 | 1.20 | 112 | 24 | 0.5 | 96 | 83 |
| Comparative Example 1 | 0.81 | 86 | 14 | 1.0 | 86 | 67 |
| Comparative Example 2 | 0.85 | 91 | 15 | 0.5 | 89 | 71 |
| Comparative Example 3 | 0.85 | 97 | 22 | 0.3 | 92 | 79 |
| Comparative Example 4 | 0.82 | 88 | 12 | 1.1 | 85 | 67 |
| Comparative Example 5 | 0.85 | 87 | 15 | 0.6 | 88 | 75 |
| Comparative Example 6 | 0.84 | 88 | 16 | 0.6 | 89 | 73 |
| Comparative Example 7 | 0.85 | 89 | 25 | 0.4 | 88 | 78 |
| Comparative Example 8 | 0.83 | 86 | 14 | 0.7 | 88 | 70 |
| Comparative Example 9 | 0.85 | 88 | 15 | 0.5 | 89 | 74 |
| Comparative Example 10 | 0.84 | 81 | 13 | 0.2 | 64 | 65 |

Table 2

| | Organic solvent | Oven temperature (°C) | Heating period (sec) | Residual ratio of organic solvent (%) |
|---|---|---|---|---|
| Example 1 | Isopar M | 120 | 20 | 80 |
| Example 2 | Isopar M | 140 | 30 | 74 |
| Example 3 | IP Solvent 2028 | 130 | 30 | 76 |
| Example 4 | IP Solvent 2028 | 150 | 20 | 72 |

(continued)

| | Organic solvent | Oven temperature (°C) | Heating period (sec) | Residual ratio of organic solvent (%) |
|---|---|---|---|---|
| Example 5 | decane | 100 | 20 | 68 |
| Example 6 | decane | 150 | 10 | 67 |
| Example 7 | IP Solvent 2028 | 140 | 30 | 70 |
| Example 8 | IP Solvent 2028 | 140 | 40 | 62 |
| Example 9 | Isopar M | 150 | 40 | 52 |
| Comparative Example 1 | decane | 25 | 120 | 99 |
| Comparative Example 2 | decane | 120 | 15 | 95 |
| Comparative Example 3 | decane | 150 | 180 | 20 |
| Comparative Example 4 | decane | 25 | 120 | 99 |
| Comparative Example 5 | hexane | 120 | 180 | 5 |
| Comparative Example 6 | isooctane | 120 | 180 | 8 |
| Comparative Example 7 | cyclododecane/ isooctane | 120 | 180 | 90 |
| Comparative Example 8 | Isopar L | 25 | 60 | 99 |
| Comparative Example 9 | IP Solvent 1016 | 120 | 180 | 8 |
| Comparative Example 10 | Isopar M | 250 | 120 | 6 |

As shown in the Examples, the composite semipermeable membranes each having an amide group content of 0.86-1.20 have practical water permeability and high chlorine resistance. In particular, in cases when the thickness of the thin membrane is 10-24 nm and the weight of the separation functional layer is 80-120 mg/m$^2$, this composite semipermeable membrane has higher chlorine resistance.

While the invention has been described in detail and with reference to specific embodiments thereof, it will be apparent to one skilled in the art that various changes and modifications can be made therein without departing from the spirit and scope thereof This application is based on a Japanese patent application filed on June 30, 2014 (Application No. 2014-133715), the contents thereof being incorporated herein by reference.

INDUSTRIAL APPLICABILITY

The composite semipermeable membrane of the present invention can be suitably used especially for the desalination of brackish water or seawater.

DESCRIPTION OF REFERENCE NUMERALS AND SIGNS

1: Separation functional layer
2: Porous separation layer

11: Thin membrane
12: Protrusion
13: Recess
T: Thickness

## Claims

1. A composite semipermeable membrane comprising a substrate, a porous supporting layer and a separation functional layer, which are superposed in this order,
wherein the separation functional layer comprises a crosslinked fully aromatic polyamide, and
the crosslinked fully aromatic polyamide has a molar ratio (amide group content) between a total molar proportion of a polyfunctional amine and a polyfunctional aromatic halide and a molar proportion of an amide group of 0.86-1.20, the molar ratio (amide group content) being represented by the following expression:

Amide group content = (molar proportion of amide group)/[(molar proportion of polyfunctional amine)+(molar proportion of polyfunctional aromatic acid halide)].

2. The composite semipermeable membrane according to claim 1, wherein the separation functional layer has a pleated structure constituted of a thin membrane, and the thin membrane has a thickness of 10-24 nm.

3. The composite semipermeable membrane according to claim 1 or 2, wherein the separation functional layer has a weight per unit area of the composite semipermeable membrane of 80-120 $mg/m^2$.

4. The composite semipermeable membrane according to any one of claims 1 to 3, wherein the separation functional layer is formed by the following steps (a) to (c):

(a) a step of bringing an aqueous solution containing a polyfunctional aromatic amine into contact with a surface of the porous supporting layer;
(b) a step of bringing an organic-solvent solution containing a polyfunctional aromatic acid halide into contact with the porous supporting layer with which the aqueous solution containing the polyfunctional aromatic amine has been brought into contact; and
(c) a step of heating the porous supporting layer with which the organic-solvent solution containing the polyfunctional aromatic halide has been brought into contact, and

wherein the heating in the step (c) is performed at a temperature of 50-180°C, and a residual ratio of the organic solvent after the heating is regulated to 30-85%, thereby obtaining the separation functional layer.

*Fig. 1*

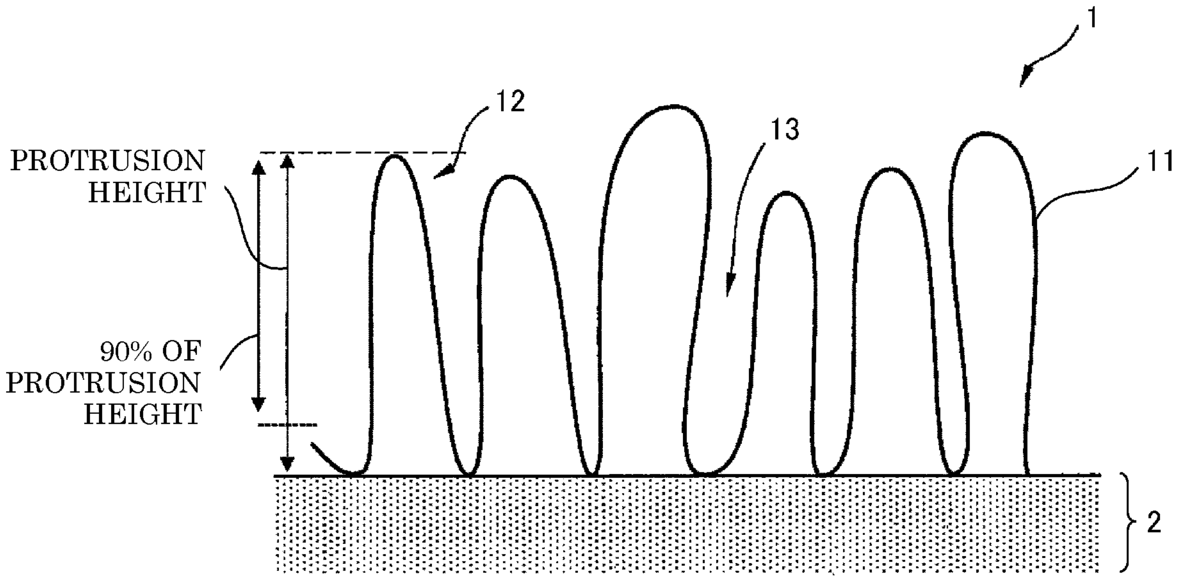


*Fig. 2*

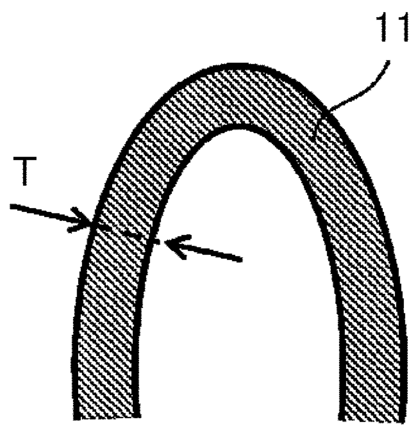

**INTERNATIONAL SEARCH REPORT**

International application No. PCT/JP2015/068921

A. CLASSIFICATION OF SUBJECT MATTER
*B01D71/56*(2006.01)i, *B01D69/00*(2006.01)i, *B01D69/10*(2006.01)i, *B01D69/12*(2006.01)i, *B32B27/34*(2006.01)i, *C08G69/32*(2006.01)i, *C08J5/18*(2006.01)n

According to International Patent Classification (IPC) or to both national classification and IPC

B. FIELDS SEARCHED

Minimum documentation searched (classification system followed by classification symbols)
B01D53/22, B01D61/00-71/82, C02F1/44, B32B27/34, C08G69/32, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2014/081232 A1 (LG Chem, Ltd.),<br>30 May 2014 (30.05.2014),<br>paragraphs [0002] to [0011], [0063] to [0064], [0104] to [0119]<br>& JP 2015-510451 A & US 2014/0319051 A1<br>& EP 2759333 A1 & KR 10-2014-0065359 A<br>& CN 104053494 A | 1,4<br>2<br>3 |
| X<br>Y<br>A | JP 11-76776 A (Toray Industries, Inc.),<br>23 March 1999 (23.03.1999),<br>claims; paragraphs [0001] to [0017], [0040] to [0049]<br>(Family: none) | 1<br>2<br>3-4 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 August 2015 (10.08.15) | 08 September 2015 (08.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/068921

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 57-140607 A (Teijin Ltd.),<br>31 August 1982 (31.08.1982),<br>claims; page 2, lower right column, line 14 to page 4, lower left column, line 9; page 5, lower right column, line 4 to page 8, upper right column, line 8; table 1<br>(Family: none) | 1<br>2<br>3-4 |
| Y<br>A | JP 09-141071 A (Toray Industries, Inc.),<br>03 June 1997 (03.06.1997),<br>paragraphs [0013] to [0016], [0019], [0045]<br>(Family: none) | 2<br>1,3-4 |
| A | JP 2009-226358 A (Toray Industries, Inc.),<br>08 October 2009 (08.10.2009),<br>paragraphs [0001] to [0008], [0021] to [0036]<br>(Family: none) | 1-4 |
| A | JP 2009-226320 A (Toray Industries, Inc.),<br>08 October 2009 (08.10.2009),<br>paragraphs [0001] to [0007], [0022] to [0039]<br>(Family: none) | 1-4 |
| A | JP 11-347385 A (Toray Industries, Inc.),<br>21 December 1999 (21.12.1999),<br>entire text<br>(Family: none) | 1-4 |
| A | WO 2012/090862 A1 (Toray Industries, Inc.),<br>05 July 2012 (05.07.2012),<br>entire text<br>& US 2013/0256215 A1 & EP 2659956 A1<br>& CN 103260733 A & KR 10-2014-0005885 A | 1-4 |
| A | JP 2002-336666 A (Nitto Denko Corp.),<br>26 November 2002 (26.11.2002),<br>entire text<br>(Family: none) | 1-4 |
| A | JP 2008-080187 A (Toray Industries, Inc.),<br>10 April 2008 (10.04.2008),<br>entire text<br>(Family: none) | 1-4 |
| A | JP 2004-209406 A (Nitto Denko Corp.),<br>29 July 2004 (29.07.2004),<br>entire text<br>(Family: none) | 1-4 |
| A | JP 1-180208 A (Toray Industries, Inc.),<br>18 July 1989 (18.07.1989),<br>entire text<br>& US 5051178 A & WO 1989/006153 A1<br>& EP 357781 A1 | 1-4 |

Form PCT/ISA/210 (continuation of second sheet) (July 2009)

**INTERNATIONAL SEARCH REPORT**

International application No.
PCT/JP2015/068921

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/105278 A1 (Toray Industries, Inc.), 01 September 2011 (01.09.2011), entire text & US 2012/0305473 A1 & EP 2540385 A1 & CN 102781560 A & KR 10-2012-0131165 A | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55014706 A
- JP 5076740 A
- JP 7178327 A
- JP 7275673 A
- JP 2078428 A
- WO 2011105278 A
- JP 2014133715 A